# EUROPÄISCHE PATENTSCHRIFT

(11) **EP 0 352 229 B1**
(45) Veröffentlichungstag und Bekanntmachung des Hinweises auf die Patenterteilung: **13.10.1993**
(21) Anmeldenummer: 89810535.8
(22) Anmeldetag: 13.07.1989
(51) Int. Cl.: D21H 21/28, C09B 67/36

(54) **Verfahren zum Färben von Papier**
Process for dyeing paper
Procédé de teinture de papier

(30) Priorität: 22.07.1988 CH 2807/88
(43) Veröffentlichungstag der Anmeldung: 24.01.1990
(73) Patentinhaber: CIBA-GEIGY AG, 4002 Basel (CH)
(72) Erfinder: Käser, Adolf, Dr., CH-4103 Bottmingen (CH)

(56) Entgegenhaltungen:
- US-A- 4 314 816

## Beschreibung

An Farbstoffe, die zum Färben von Papier verwendet werden, werden heutzutage besondere Anforderungen gestellt: Die Farbstoffe sollen z.B. einen hohen Ausziehgrad unter den speziellen Färbebedingungen aufweisen, sie sollen Färbungen mit guten Nassechtheiten ergeben und sie sollen so gut löslich sein, dass die Herstellung flüssiger Handelsformen möglich ist. Diese Bedingungen werden von den zur Zeit erhältlichen oder in der Literature, z.B US-A-4 314 816, beschriebenen blauen Papierfarbstoffen noch nicht in allen Belangen erfüllt.

Es wurden nun blaue Farbstoffe gefunden, die sich hervorragend zum Färben von Papier eignen und die genannten Anforderungen sehr gut erfüllen. Zudem ergeben die Farbstoffe sehr gute coloristische Ausbeuten.

Gegenstand der vorliegenden Erfindung ist daher ein Verfahren zum Färben von Papier, welches dadurch gekennzeichnet ist, dass man Farbstoffe der Formel 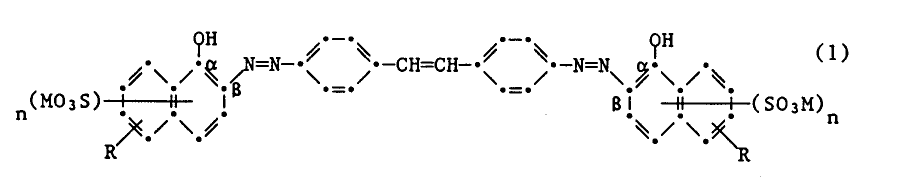
verwendet, worin
- R: Wasserstoff, -OH, -OR¹, -NH₂, -NHR¹, -NHCOR¹, -NHSO₂R¹, -NHCONH₂ oder -NHCONHR¹ bedeutet, wobei R¹ gegebenenfalls substituiertes Alkyl oder Aryl,
- M: Wasserstoff oder ein Aequivalent eines farblosen Kations und
- n: 1 oder 2 bedeutet, wobei die OH-Gruppe in α-Stellung und die Azogruppe in β-Stellung am Naphthalinkern miteinander vertauscht sein können.

Bedeutet R¹ einen Alkylrest, so kann es sich um einen gegebenenfalls substituierten unverzweigten oder verzweigten Alkylrest oder um einen Cycloalkylrest handeln. Der Cycloalkylrest weist vorzugsweise 5 bis 8 C-Atome, der offenkettige Alkylrest vorzugsweise 1 bis 8 C-Atome auf.

Als unverzweigte oder verzweigte offenkettige Alkylreste kommen z.B. in Frage: Methyl, Ethyl, n- und iso-Propyl, n-, sec.- oder tert.Butyl, n-und iso-Pentyl, n- und iso-Hexyl oder 2-Ethylhexyl.

Diese Alkylreste können ein- oder mehrmals substituiert sein, beispielsweise durch C₁-C₄-Alkoxy, durch OH substituiertes C₁-C₄-Alkoxy, Phenyl, Phenoxy oder Phenylaminocarbonyl, wobei die Phenylgruppe in den drei letztgenannten Resten z.B. durch C₁-C₄-Alkyl, C₁-C₄-Alkoxy oder Phenoxy substituiert sein kann. Geeignete Reste dieser Art sind z.B.: Hydroxyethyl, 1-Hydroxy-isopropyl, Ethoxymethyl, 2-Hydroxyethoxypentyl, Benzyl, 1-Phenylethyl, 2-Phenylethyl, 1-Methyl-2-phenylethyl, 1-iso-Butyl-3-phenylpropyl, 1,5-Diphenylpentyl-3, 1-Methyl-2-phenoxyethyl oder 1-Methyl-2-phenylaminocarbonyl-ethyl.

Bedeutet R¹ einen gegebenenfalls substituierten C₅-C₈-Cycloalkylrest, so handelt es sich vor allem um den Cyclopentyl- und Cyclohexylrest; als Substituenten kommen vor allem C₁-C₄-Alkyl, insbesondere Methyl in Frage.

Bedeutet R¹ einen Arylrest, so handelt es sich vor allem um einen Naphthylrest und insbesondere um einen Phenylrest, wobei diese Reste substituiert sein können, z.B. durch Sulfo, Carboxy, C₁-C₄-Alkyl, C₁-C₄-Alkoxy, Halogen, wie Fluor, Chlor oder Brom, Nitro, C₁-C₄-Alkylcarbonylamino oder C₁-C₄-Alkoxycarbonyl.

Vorzugsweise bedeutet R¹ unsubstituiertes C₁-C₄-Alkyl oder Phenyl.

M bedeutet Wasserstoff oder ein Aequivalent eines farblosen Kations, beispielsweise Lithium, Natrium, Kalium, Ammonium oder die protonierte Form eines C₄-C₁₂-Trialkylamins, C₄-C₁₂-Diamins oder C₂-C₁₂-Alkanolamins

Bei M in der Bedeutung eines protonierten C₄-C₁₂-Trialkylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin handeln; geeignet sind auch Gemische verschiedener protonierter Amine.

Hat M die Bedeutung protoniertes C₄-C₁₂-Diamin, handelt es sich z.B. um ein Ethylendiamin oder 1,3-Diaminopropan, bei dem eines oder beide N-Atome zusätzlich mit einem oder zwei C₁-C₄-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar. Beispiele sind: N-Ethylethylendiamin, N,N-Dimethylethylendiamin, N,N'-Dimethylethylendiamin, N,N-Diethylethylendiamin, 3-Dimethylamino-1-propylamin oder 3-Diethylamino-1-propylamin.

Steht M für ein protoniertes C₂-C₁₂-Alkanolamin, so kann es sich z.B. um die protonierte Form eines Monoalkanol-, Dialkanol-, Monoalkanolmonoalkyl-, Monoalkanoldialkyl-, Dialkanolalkyl- oder Trialkanolamins oder um ein Gemisch verschiedener protonierter Alkanolamine handeln. Beispiele sind protoniertes 2-Aminoethanol, Di-(2-hydroxyethyl)-amin, N-(2-Hydroxyethyl)-dimethylamin, N-(2-Hydroxyethyl)-diethylamin, N,N-Di-(2-hydroxyethyl)-methylamin, N,N-Di-(2-hydroxyethyl)-ethylamin oder Tri-(2-hydroxyethyl)-amin, 2-Aminoethoxyethanol oder Diethylaminopropylamin.

Vorzugsweise hat M die Bedeutung Na^{⊕}, Li^{⊕} oder protoniertes C₄-C₆-Alkanolamin, wobei bei den C₄-C₆-Alkanolaminen Tri-(2-hydroxyethyl)-amin, Di-(2-hydroxyethyl)-amin oder ein Gemisch dieser beiden Amine bevorzugt ist.

Eine bevorzugte Ausführungsform des erfindungsgemässen Färbeverfahrens besteht darin, dass man Farbstoffe der Formel (1) verwendet, worin R Wasserstoff, OH oder NH₂ bedeutet.

Es ist ausserdem bevorzugt, solche Farbstoffe der Formel (1) zu verwenden, worin die OH-Gruppe in α-Stellung und die Azogruppen in β-Stellung der Naphthalinkerne angeordnet sind.

Das besonders bevorzugte Verfahren zum Färben von Papier besteht darin, dass man Farbstoffe der Formel 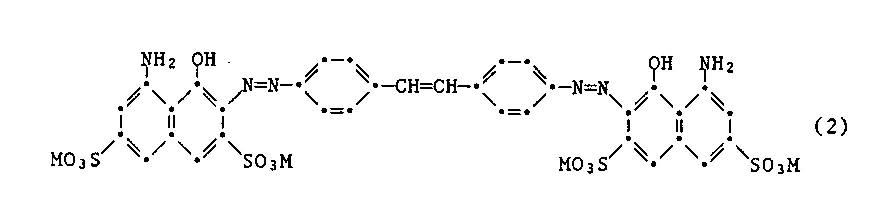
verwendet, worin M Na^{⊕}, Li^{⊕} oder protoniertes C₄-C₆-Alkanolamin bedeutet.

Die in den erfindungsgemässen Verfahren verwendeten Farbstoffe sind bekannt oder können auf an sich bekannte Art und Weise hergestellt werden, beispielsweise indem man 4,4'-Diaminostilben tetrazotiert und auf eine Naphtholsulfonsäure kuppelt.

Die Farbstoffe der Formel (1) bzw. (2) können in fester oder flüssiger Form zum Färben von Papier eingesetzt werden.

Als Pulver oder Granulat werden die Farbstoffe insbesondere bei der diskontinuierlichen Massefärbung verwendet, wobei der Farbstoff chargenweise im Pulper, Holländer oder in der Mischbütte zugesetzt wird. Dabei werden die Farbstoffe vorzugsweise als Farbstoffzubereitungen verwendet, die Coupagemittel, z.B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

Ein weiterer Gegenstand der Erfindung sind somit feste Farbstoffzubereitungen zum Färben von Papier, welche Farbstoffe der Formeln (1) oder (2) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer oder an irgendeinem anderen geeigneten Punkt der Papierherstellung zuzugeben.

Ein weiterer Gegenstand der Erfindung sind daher konzentrierte wässrige Lösungen von Farbstoffen der Formeln (1) oder (2), welche dadurch gekennzeichnet sind, dass sie mindestens 10, beispielsweise 10 bis 30 Gewichtsprozent Farbstoff, bezogen auf das Gesamtgewicht der Lösung, enthalten.

Vorzugsweise enthalten die Lösungen 20 bis 30 Gewichtsprozent Farbstoff.

Konzentrierte wässrige Lösungen von Farbstoffen der Formel (1) können z.B. hergestellt werden, indem man die bei der Herstellung des Farbstoffes anfallende Farbstoffsuspension filtriert, gegebenenfalls entsalzt, z.B. durch ein Membrantrennverfahren und durch Zusatz von Hilfsmitteln, wie Harnstoff, ε-Caprolactam oder Polyethylenglykol stabilisiert. Man kann aber auch den isolierten Farbstoff in Salzsäure anschlämmen, erneut filtrieren und den Filterkuchen mit Lithiumhydroxid oder einem geeigneten Amin, z.B. einem Alkanolamin und der nötigen Menge Wasser vermischen. Schliesslich kann man auch die Kupplung in Gegenwart von LiOH, Ammoniak oder Alkanolamin durchführen und die Syntheselösung anschliessend entsalzen. Derartige Farbstofflösungen eignen sich zum Färben einer Papierpulpe in Anwesenheit von Kollophonium und Alaunschlichte.

Die so hergestellten Farbstofflösungen enthalten vorzugsweise auf 100 Teile Farbstoff in Form der freien Säure 400 bis 900 Teile Wasser, 0 bis 200 Teile weiterer Zusätze wie Harnstoff, ε-Caprolactam oder Polyethylenglykol sowie soviel Base, dass der pH-Wert zwischen 7 und 10 liegt. Als Base kommen z.B. NaOH, LiOH, Ammoniak oder organische Amine, z.B. Alkanolamine in Betracht.

Die erfindungsgemässen wässrigen Konzentrate, die bei Lagerungstemperaturen bis zu -5°C stabil sind, eignen sich zum Färben von Papier, auf welchem sie mit oder ohne Verwendung einer Schlichte attraktive blaue Farbtöne ergeben.

Farbstoffe der Formel (1) sind zum Teil bereits bekannt, jedoch wurde deren Verwendung zum Färben von Papier nicht in Betracht gezogen. Gegenüber den bekannten blauen Papierfarbstoffen zeichnen sich die erfindungsgemäss verwendeten Farbstoffe der Formel (1) dadurch aus, dass sie auf Papier Färbungen mit besseren coloristischen Ausbeuten ergeben.

In den nachfolgenden Beispielen bedeuten die Teile Gewichtsteile, und die Temperaturen sind in Celsiusgraden angegeben.

### Beispiel 1:

Man bereitet eine Lösung der Kupplungskomponente, indem man 70,2 Teile 1-Amino-8-naphthol-3,6-disulfonsäure in Form des Natriumsalzes bei einem pH-Wert von 7-8 in 250 Teilen Wasser löst.
Dann werden 21,8 Teile 4,4'-Diaminostilben in 250 Teilen Wasser durch Zugabe von 52 Vol.-Teilen 4N Natriumnitritlösung und 55 Teilen 32%iger Salzsäure bei einer Temperatur zwischen 0 und 5°C diazotiert und innerhalb von 1 Stunde zur vorstehend beschriebenen Lösung der Kupplungskompo-nente getropft. Der pH-Wert wird dabei durch Zugabe von 4N Natronlauge zwischen 8 und 9 und die Temperatur zwischen 5 und 10°C gehalten. Der so erhaltene Farbstoff der Formel 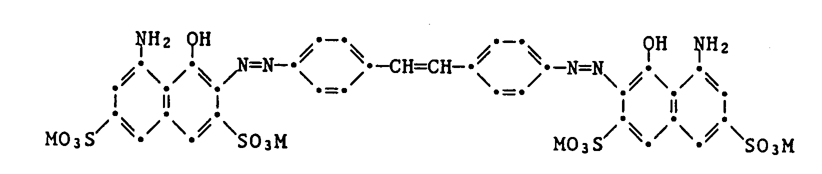
wird durch Aussalzen mit NaCl als Na-Salz isoliert. Er färbt Papier in brillanten blauen Tönen. Die färberischen Eigenschaften, wie Lichtechtheit, Ausblutechtheit und Ausziehvermögen auf Papier, sind ausgezeichnet. Der anfallende Presskuchen kann direkt zu flüssigen Präparationen verarbeitet werden.

### Beispiel 2:

200 Teile des Farbstoffes aus Beispiel 1 werden in Form der freien salzarmen Farbstoffsäure in 500 Teilen Wasser homogen verrührt und durch Zugabe von 75 Teilen Diethanolamin und 100 Teilen Harnstoff bei 40° gelöst. Die Lösung wird unter Zusatz eines Filterhilfsmittels klärfiltriert. Das Filtrat lässt man auf Raumtemperatur abkühlen und stellt es mit Wasser auf 1000 Teile ein. Man erhält eine stabile Farbstofflösung, welche eine flüssige Handelsform darstellt.

Anstelle von Diethanolamin können auch Monoethanolamin, Triethanolamin, 2-(2-Aminoethoxy)-ethanol, Polyglykolamine, wie sie in der DE-A-2.061.760 beschrieben sind, Ammoniak, Tetramethylammoniumhydroxid, Lithiumhydroxid oder Lithiumcarbonat eingesetzt werden.

### Beispiel 3:

Eine flüssige Handelsform des Farbstoffs aus Beispiel 1 als Lithium-Salz wird folgendermassen hergestellt:
70,2 Teile 1-Amino-8-naphthol-3,6-disulfonsäure werden in 400 Teilen Wasser unter Zugabe von so viel LiOH, dass sich ein pH-Wert von 7-8 einstellt, gelöst. Zu dieser Lösung tropft man innerhalb von einer Stunde bei 5-10°C die im Beispiel 1 beschriebene Tetrazokomponente. Der pH-Wert wird dabei durch Zugabe von 3N LiOH-Lösung zwischen 8 und 9 gehalten.

Die resultierende Farbstofflösung wird mit einer üblichen Membran entsalzt und anschliessend auf ein Gewicht von 600 g aufkonzentriert.

Man erhält eine stabile Farbstofflösung. Diese kann gewünschtenfalls durch Zusatz von Amiden, z.B. Harnstoff oder ε-Caprolactam, in Mengen von ca. 30 bis 120 g in ihren rheologischen Eigenschaften verändert werden.

### Beispiel 4-13:

Flüssige Handelsformen weiterer Farbstoffe können in der in den Beispielen 1 bis 3 beschriebenen Weise erhalten werden, wenn man anstelle der im Beispiel 1 verwendeten Kupplungskomponente die in der folgenden Tabelle in Spalte 2 aufgeführten verwendet. Die Farbstoffe färben Papier in der in der letzten Spalte verzeichneten Nuance.

| Beispiel | Kupplungskomponente | Nuance auf Papier |
|---|---|---|
| 4 | 1-Amino-8-hydroxynaphthalin-2,4-disulfonsäure | blau |
| 5 | 1-Amino-8-hydroxynaphthalin-4,6-disulfonsäure | blau |
| 6 | 1,8-Dihydroxynaphthalin-3,6-disulfonsäure | blau |
| 7 | 1-Hydroxynaphthalin-3,6-disulfonsäure | rotstichig blau |
| 8 | 1-Hydroxynaphthalin-3,8-disulfonsäure | rotstichig blau |
| 9 | 2-Hydroxynaphthalin-3,6-disulfonsäure | violett |
| 10 | 2-Hydroxynaphthalin-5,7-disulfonsäure | violett |
| 11 | 2-Hydroxynaphthalin-6,8-disulfonsäure | violett |
| 12 | 2-(3'-Sulfophenylamino)-5-naphthol-7-sulfonsäure | rotstichig blau |
| 13 | 2-Anilino-5-naphthol-7-sulfonsäure | rotstichig blau |

### Beispiel 14:

In einem Holländer werden 70 Teile chemisch gebleichte Sulfitzellulose (aus Nadelholz) und 30 Teile chemisch gebleichte Sulfitzellulose (aus Birkenholz) in 2000 Teilen Wasser gemahlen. Zu dieser Masse gibt man 2,5 Teile der im Beispiel 2 beschriebenen Farbstofflösung. Nach 20 Minuten Mischzeit wird aus dieser Masse Papier hergestellt. Das auf diese Weise erhaltene saugfähige Papier ist blau gefärbt. Das Abwasser ist praktisch farblos.

### Beispiel 15:

0,5 Teile des Farbstoffpulvers aus Beispiel 1 werden in 100 Teilen heissem Wasser gelöst und die Lösung auf Raumtemperatur abgekühlt. Diese Lösung gibt man zu 100 Teilen chemisch gebleichter Sulfitzellulose, die mit 2000 Teilen Wasser in einem Holländer gemahlen wurden. Nach 15 Minuten Durchmischung wird auf übliche Art mit Harzleim und Aluminiumsulfat geleimt. Papier, das aus diesem Stoff hergestellt wird, besitzt eine blaue Nuance mit guten Nassechtheiten.

### Beispiel 16:

96 g des gemäss Beispiel 1 erhaltenen Farbstoff-Na-Salzes werden in 600 ml Wasser angerührt und bei 50° mit 160 ml Nitrobenzol, 81,4 g Tributylamin und 44 ml HCl (32 %) versetzt. Man verrührt bei 70°, bis der Farbstoff vollständig in die organische Phase übergegangen ist. Die wässrige Phase wird verworfen und die organische Phase wird zweimal mit je 600 ml heissem Wasser gewaschen. Dann werden 300 ml Wasser und 80,0 g Triethanolamin zugegeben und das Gemisch bei 85° verrührt, bis der Farbstoff vollständig in die wässrige Phase übergegangen ist. Die wässrige Phase wird durch Wasserdampfdestillation von Spuren Nitrobenzol und Tributylamin befreit. Man erhält eine stabile Farbstofflösung. Die organische Phase wird tel quel für weitere Extraktionen eingesetzt.

## Patentansprüche

1. Verfahren zum Färben von Papier, dadurch gekennzeichnet, dass man Farbstoffe der Formel 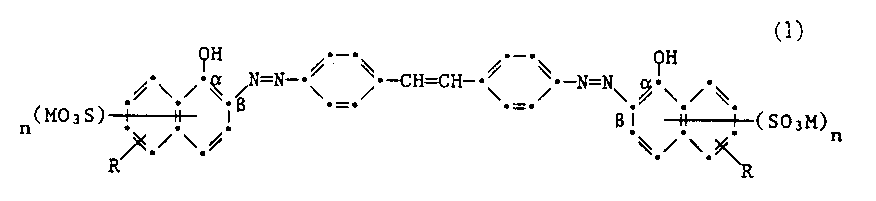 verwendet, worin
R Wasserstoff, -OH, -OR¹, -NH₂, -NHR¹, -NHCOR¹, -NHSO₂R¹, -NHCONH₂ oder -NHCONHR¹ bedeutet, wobei R¹ gegebenenfalls substituiertes Alkyl oder Aryl,
M Wasserstoff oder ein Aequivalent eines farblosen Kations und
n 1 oder 2 bedeutet, wobei die OH-Gruppe in α-Stellung und die Azogruppe in β-Stellung am Naphthalinkern miteinander vertauscht sein können.

2. Verfahren gemäss Anspruch 1, dadurch gekennzeichnet, dass man Farbstoffe der Formel (1) verwendet, worin R Wasserstoff, OH oder NH₂ bedeutet.

3. Verfahren gemäss Anspruch 1, dadurch gekennzeichnet, dass man Farbstoffe der Formel (1) verwendet, worin die OH-Gruppen in α-Stellung und die Azogruppen in β-Stellung angeordnet sind.

4. Verfahren gemäss Anspruch 1, dadurch gekennzeichnet, dass man Farbstoffe der Formel 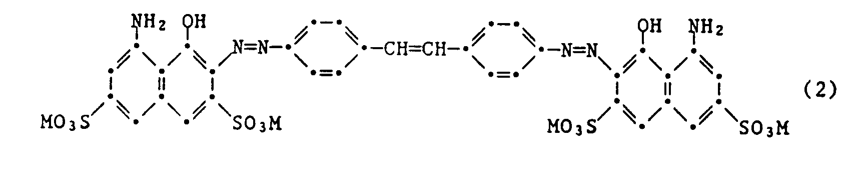 verwendet, worin M Na^{⊕}, Li^{⊕} oder protoniertes C₄-C₆-Alkanolamin bedeutet.

5. Feste Farbstoffzubereitungen zum Färben von Papier, welche Farbstoffe der Formeln (1) oder (2) gemäss den Ansprüchen 1 und 4 enthalten.

6. Konzentrierte wässrige Lösungen von Farbstoffen der Formeln (1) oder (2), dadurch gekennzeichnet, dass sie 10 bis 30 Gewichtsprozent Farbstoff, bezogen auf das Gesamtgewicht der Lösung enthalten.

7. Konzentrierte wässrige Lösungen gemäss Anspruch 6, dadurch gekennzeichnet, dass sie 20 bis 30 Gewichtsprozent Farbstoff enthalten.

8. Konzentrierte wässrige Lösungen gemäss Anspruch 6 oder 7, dadurch gekennzeichnet, dass der Farbstoff in Form eines Lithium- oder Alkanolaminsalzes, insbesondere eines Diäthanolamin- oder Triäthanolaminsalzes, vorliegt.

9. Verwendung von festen Farbstoffzubereitungen oder konzentrierten wässrigen Farbstofflösungen gemäss den Ansprüchen 5 bis 8 zum Färben von Papier.

10. Das nach den Verfahren gemäss den Ansprüchen 1 bis 4 und 9 gefärbte Papier.

## Claims

1. A process for dyeing paper, which comprises the use of a dye of formula 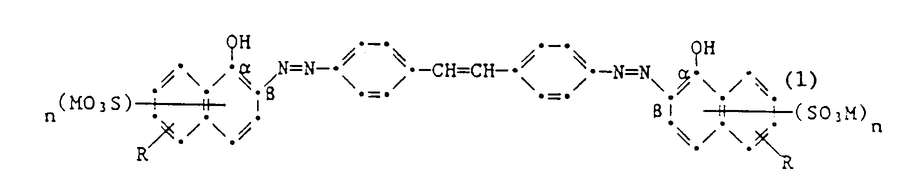 in which
R is hydrogen, -OH, -OR¹, -NH₂, -NHR¹, -NHCOR¹, -NHSO₂R¹, -NHCONH₂ or -NHCONHR¹, in which R¹ is unsubstituted or substituted alkyl or aryl,
M is hydrogen or an equivalent of a colourless cation, and
n is 1 or 2,
and the -OH group in the α-position and the azo group in the β-position on the naphthalene nucleus are mutually interchangeable.

2. A process according to claim 1, which comprises the use of a dye of formula (1) in which R is hydrogen, OH or NH₂.

3. A process according to claim 1, which comprises the use of a dye of formula (1) in which the OH groups are arranged in the α-position and the azo groups are arranged in the β-position.

4. A process according to claim 1, which comprises the use of a dye of formula 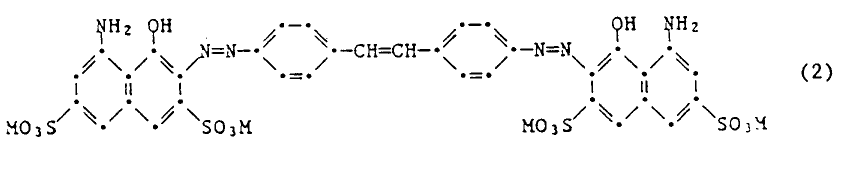 in which M is Na^{⊕}, Li^{⊕} or protonated C₄-C₆alkanolamine.

5. A solid dye formulation for dyeing paper, which contains a dye of formula (1) or (2) according to claims 1 to 4.

6. A concentrated aqueous solution of a dye of formula (1) or (2), which solution contains 10 to 30 percent by weight of dye, based on the total weight of the solution.

7. A concentrated aqueous solution according to claim 6, which contains 20 to 30 percent by weight of dye.

8. A concentrated aqueous solution according to claim 6 or claim 7, wherein the dye is in the form of a lithium or alkanolamine salt, especially of a diethanolamine or triethanolamine salt.

9. Use of a solid dye formulation or concentrated aqueous dye solution according to claims 5 to 8 for dyeing paper.

10. Paper dyed by a process according to claims 1 to 4 or 9.

## Revendications

1. Procédé de coloration du papier, caractérisé en ce que l'on utilise des colorants de formule : 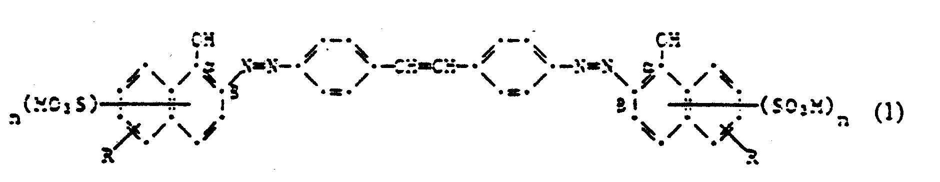 dans laquelle R représente un atome d'hydrogène ou un groupe OH, OR¹, NH₂, NHR¹, NHCOR¹, NHSO₂R¹, NHCONH₂ ou NHCONHR¹, R¹ représentant un groupe alkyle ou aryle éventuellement substitué,
M représente un atome d'hydrogène ou un équivalent d'un cation incolore et n est égal à 1 ou 2, le groupe OH en position α et le groupe azo a position β sur le noyau du naphtalène pouvant être, intervertis.

2. Procédé selon la revendication 1, caractérisé en ce que l'on utilise des colorants de formule (1) pour lesquels R représente un atome d'hydrogène ou un groupe OH ou NH₂.

3. Procédé selon la revendication 1, caractérisé en ce que l'on utilise des colorants de formule (1) pour lesquels les groupes OH sont fixés en position α et les groupes azo sont fixés position β.

4. Procédé selon la revendication 1, caractérisé en ce que l'on utilise des colorants de formule : 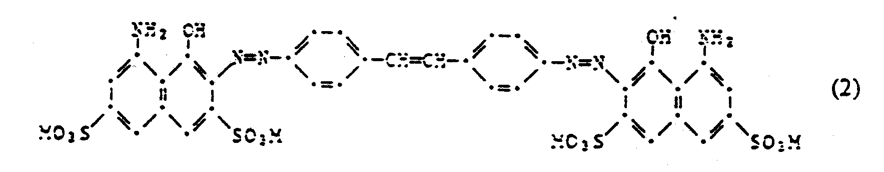 dans laquelle M représente Na^{⊕}, Li^{⊕} ou une alcanolamine en C₄ à C₆ protonée.

5. Préparations solides de colorant pour la coloration du papier, qui contiennent des colorants de formule (1) ou (2) selon les revendications 1 et 4.

6. Solutions aqueuses concentrées de colorant de formule (1) ou (2), caractérisées en ce qu'elles contiennent 10 à 30% en poids de colorant par rapport au poids total de la solution.

7. Solutions aqueuses concentrées selon la revendication 6, caractérisées en ce qu'elles contiennent 20 à 30% en poids de colorant.

8. Solutions aqueuses concentrées selon la revendication 6 ou 7, caractérisées en ce que le colorant est présent sous la forme d'un sel de lithium ou d'alcanolamine, en particulier sous la forme d'un sel de diéthanolamine ou de triéthanolamine.

9. Utilisation des préparations solides de colorant ou des solutions aqueuses concentrées de colorant selon les revendications 5 à 8 pour la coloration du papier.

10. Papier coloré par le procédé selon les revendications 1 à 4 et 9.
